# EUROPÄISCHE PATENTSCHRIFT

(11) **EP 0 941 254 B1**
(45) Veröffentlichungstag und Bekanntmachung des Hinweises auf die Patenterteilung: **28.06.2000**
(21) Anmeldenummer: 97951171.4
(22) Anmeldetag: 11.11.1997
(51) Int. Cl.: C08F 2/00, C08F 2/40

(54) **VERFAHREN ZUR POLYMERISATION VINYLISCHER MONOMERE**
METHOD FOR POLYMERIZING VINYL MONOMERS
PROCEDE DE POLYMERISATION DE MONOMERES VINYLIQUES

(30) Priorität: 27.11.1996 DE 19648811
(43) Veröffentlichungstag der Anmeldung: 15.09.1999
(73) Patentinhaber: BASF AKTIENGESELLSCHAFT, 67056 Ludwigshafen (DE)
(72) Erfinder: LYNCH, John, D-67590 Monsheim (DE); SUTORIS, Heinz, Friedrich, D-67227 Frankenthal (DE); ZUBILLER, Jürgen, D-67655 Kaiserslautern (DE); AUMÜLLER, Alexander, D-67435 Neustadt (DE)
(86) Internationale Anmeldenummer: EP9706290
(87) Internationale Veröffentlichungsnummer: WO9823649

(56) Entgegenhaltungen:
- EP-A- 0 620 206
- EP-A- 0 685 447
- EP-A- 0 801 092
- WO-A-87/04179
- WO-A-95/31484
- WO-A-97/32833

## Beschreibung

Gegenstand der vorliegenden Erfindung ist die Verwendung von N-Oxyl-Verbindungen zur Verhinderung von Wandbelägen bei der Polymerisation von vinylischen Monomeren in wässriger Phase.

Im Verlauf von Polymerisationsreaktionen treten an den Reaktorwänden häufig Polymerbeläge auf. Diese Polymerbeläge führen zu verfahrenstechnischen Schwierigkeiten, da sie in regelmäßigen Abständen, meist nach jeder Polymerisationsreaktion, entfernt werden müssen, was oft einen erheblichen Aufwand bedeutet. Außerdem können sich Beläge, die in der Regel aus atypischen Polymerisaten z.B. hinsichtlich ihrer Molekulargewichtsverteilung bestehen, teilweise ablösen und auf diese Weise zu Inhomogenitäten der Polymerisate führen.

Um der Belagbildung abzuhelfen, wurden verschiedene Maßnahmen entwickelt. Da die Belagbildung stark von der Oberflächenstruktur der Reaktorwände abhängt, z.B. von deren Rauigkeit, zielen die Maßnahmen vor allem auf die Glättung der Oberflächen. Neben mechanischen Maßnahmen wurde auch versucht, die Güte der Oberfläche durch Zusatz von Korrosionsschutzmitteln zur Polymerisation zu erhalten (s. z.B. G.W. Becker, D. Braun (Hrsg.), Kunststoff Handbuch, Hauser Verlag, München, Wien 1986, Band 2/1, S. 153). Diese Maßnahmen können in der Regel die Belagbildung jedoch nur unzureichend verhindern.

In der älteren deutschen Patentanmeldung 19 609 312.0 wird ein Verfahren zur Verhinderung der vorzeitigen Polymerisation von bestimmten vinylgruppenhaltigen Monomeren, z.B. bei der Destillation, Reinigung, Lagerung und während des Transports, durch Zugabe von N-Oxyl-Verbindungen sekundärer Amine beschrieben. Auch für die Stabilisierung von Styrol und anderen vinylaromatischen Verbindungen während der Destillation ist der Einsatz von N-Oxyl-Verbindungen beschrieben (US-A-5 254 760). Es ist jedoch auch bekannt, daß bereits Spuren solcher Nitroxylverbindungen den folgenden Polymerisationsprozeß stören; sie bewirken eine verzögerte Polymerisation und unkontrollierte Kettenabbrüche, was zu Polymeren mangelhafter Reproduzierbarkeit und kurzer Kettenlänge führt. Diese nachteiligen Effekte werden von Mardare et al in Polym. Prep. (Am. Chem. Soc., Div. Polym. Sci.) 35 (1), 778 (1994) beschrieben.

Die Aufgabe der vorliegenden Erfindung war es daher, ein Verfahren zur Polymerisation von vinylischen Monomeren zu finden, bei dem die Wandbelagsbildung weitgehend unterbunden wird ohne den Polymerisationsprozeß spürbar zu beeinträchtigen.

Diese Aufgabe wird gelöst durch die Verwendung von N-Oxyl-Verbindungen sekundärer Amine, welche keine Wasserstoffatome an den α-C-Atomen tragen, zur Verhinderung von Belägen an Reaktoroberflächen bei der Polymerisation von vinylischen Monomeren in wässriger Phase, wobei die N-oxyl- Verbindungen in Mengen von 2 bis 50 ppm, bezogen auf das Gesamtgewicht der Monomeren, eingesetzt werden.

Unter vinylischen Monomeren sollen alle polymerisierbaren Monomeren verstanden werden, die eine terminale olefinische Doppelbindung tragen. Zu nennen sind beispielsweise Acrylsäure und Methacrylsäure und deren Derivate wie Nitrile und Ester, insbesondere Methyl-, Ethyl-, Propyl- und Butylacrylat und -methacrylat, weiterhin Vinylester von C₂-C₅-Carbonsäuren, insbesondere Vinylacetat, Vinylpropionat und Vinylbutanoat, aromatische Vinylverbindungen, insbesondere Styrol, Diene, insbesondere Butadien, Vinylhalogenide, insbesondere Vinylchlorid, Vinylether wie Methylvinylether, Ethylvinylether oder Butylvinylether, Vinylthioether, Vinylcarbazole, Vinylpyrrolidone, Vinylphthalimide, Vinylisocyanate, Vinylcaprolactame, Vinylimidazole, Vinylformamid, Vinylsulfonsäure und Vinylsilane wie Vinyltriacetoxysilan, Vinyltrichlorosilan oder Vinyltrimethoxysilan.

Auch α-Olefine wie Ethylen, Propylen, 1-Buten, 1-Hexen und 1-Octen kommen in Betracht, insbesondere zusammen mit anderen Comonomeren bei Copolymerisationsverfahren.

Bei solchen Copolymerisationsprozessen läßt sich das erfindungsgemäße Verfahren besonders vorteilhaft einsetzen. Beispielhaft seien als geeignete Copolymere, welche nach den Verfahren hergestellt werden können, Styrol-Butadien, synthetische kautschukartige Blockpolymere wie Styrol-Butadien-Styrol, Styrol-Butylacrylat, Butadien-Acrylnitril, Acrylnitril-Butadien-Styrol und Ethylen-Vinylchlorid genannt.

Besonders geeignet ist die erfindungsgemäße Verwendung bei der Polymerisation von Styrol, gewünschtenfalls mit weiteren Comonomeren und gegebenenfalls in Gegenwart von flüchtigen Treibmitteln, wie Pentan, sowie zur Polymerisation von Vinylchlorid.

Das erfindungsgemäße Verfahren betrifft Polymerisationen in wässriger Phase. Unter wässriger Phase sollen sowohl Lösungen, Emulsionen und Suspensionen der entsprechenden Monomeren oder Polymeren in Wasser als auch in Lösungsmittelgemischen, die zu einem großen Teil, d.h. mindestens 20 Gew.-%, Wasser enthalten, verstanden werden. Alle üblichen Emulsionspolymerisationen und Suspensionspolymerisationen können also nach dem erfindungsgemäßen Verfahren durchgeführt werden. Die Verfahrensbedingungen können so gewählt werden, wie sie für derartige Polymerisationsprozesse üblich sind und beispielsweise in Houben Weyl, Methoden der organischen Chemie, Bd. E20, S. 218 ff und in Ullmanns Encyklopädie der technischen Chemie, 4. Auflage, Bd. 19, S. 132 ff und der dort zitierten Literatur beschrieben werden.

Erfindungsgemäß sind bei dem Polymerisationsverfahren N-Oxyl-Verbindungen sekundärer Amine zugegen. Die Applikation dieser N-Oxyl-Verbindungen kann dabei auf verschiedene Weise erfolgen.

Als vorteilhaft hat sich die Zugabe der N-Oxyl-Verbindung zum Polymerisationsgemisch erwiesen. Die N-Oxyl-Verbindung kann auch bereits im Monomeren enthalten sein, um dieses vor vorzeitiger Polymerisation zu schützen.

Die N-Oxyl-Verbindung sollte in einer Konzentration im Polymerisationsgemisch enthalten sein, welche die Geschwindigkeit der Polymerisation nur wenig beeinflußt. Die Sensitivität der Polymerisation bezüglich der Menge der N-Oxyl-Verbindung hängt von verschiedenen Parametern ab, insbesondere von der Art des Monomeren, von der Struktur der N-Oxylverbindung, von der Temperatur sowie von weiteren möglicherweise im Reaktionsgemisch vorhandenen Radikalbildnern und Radikalfängern.

Der Konzentrationsbereich für die N-Oxyl-Verbindung(en) im Polymerisationsgemisch ist 2 bis 50 ppm, besonders bis 20 ppm, ganz besonders 2 bis 10 ppm (1 ppm = 10⁻⁶ Gewichtsteile N-Oxyl-Verbindung, bezogen auf das Gesamtgewicht der Monomeren). Bei diesen Konzentrationen wird die Belagbildung im allgemeinen vollständig inhibiert, ohne jedoch die Kinetik der Reaktion merklich zu beeinflussen.

Neben der Zugabe zum Polymerisationsgemisch hat sich besonders eine Verfahrensvariante bewährt, bei der man die Reaktoroberfläche vor der Befüllung des Reaktors mit dem Polymerisationsgemisch mit einer Lösung der N-Oxyl-Verbindung benetzt.

Die Benetzung kann einfach und wirkungsvoll durch Besprühen der Reaktorwand und anderer im Reaktor befindlicher Teile, wie dem Rührer, mit einer Lösung der N-Oxylverbindung erreicht werden. Die N-Oxylverbindungen sind oft nur wenig wasserlöslich, lösen sich jedoch meist in organischen Lösungsmitteln wie Methanol, Ethanol, Propanol, Aceton, Ethylacetat, Dimethylformamid usw. Ein besonders geeignetes Lösungsmittel für viele N-Oxyl-Verbindungen ist Methanol. Die Konzentration der N-Oxyl-Verbindung in der Sprühlösung ist nicht kritisch, sie wird vorteilhafterweise zwischen 0,01 und 1 Gew.-%, bezogen auf die Gesamtmasse der Sprühlösung, eingestellt.

Alternativ kann die Benetzung der Reaktoroberfläche auch durch Befüllen mit einer Lösung ähnlich der Sprühlösung und anschließendes Ablassen erfolgen.

Die Benetzung der Reaktoroberfläche hat gegenüber dem Zusatz der N-Oxyl-Verbindung in das Polymerisationsgemisch den Vorteil, daß der Einfluß auf die Polymerisationsgeschwindigkeit äußerst gering ist und daß auch der Bereich oberhalb des Flüssigkeitsspiegels, insbesondere der Bereich knapp oberhalb des Flüssigkeitsspiegels, in dem häufig Beläge zu finden sind, vor Belagbildung geschützt wird.

Vorteilhaft ist weiterhin auch eine Kombination beider Applikationsformen, wobei dann für den direkten Zusatz zur Polymerisationslösung sehr geringe Mengen ausreichend sind.

Geeignete N-Oxyl-Verbindungen zum Einsatz im erfindungsgemäßen Verfahren sind z.B. solche mit den folgenden Strukturen 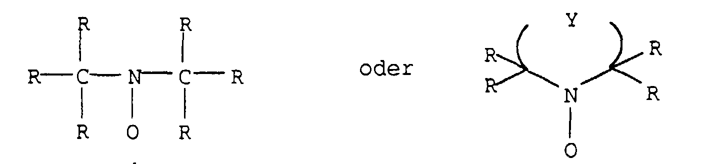 wobei R gleiche oder verschiedene Alkyl-, Cycloalkyl-, Aralkyl- oder Arylreste, die auch paarweise zu einem Ringsystem verbunden sein können, und Y eine Gruppe, die erforderlich ist, um einen 5- oder 6-gliedrigen Ring zu vervollständigen, bedeuten. Beispielsweise steht R für einen C₁-C₂₀-, insbesondere C₁-C₈-Alkylrest, einen C₅- oder C₆-Cycloalkylrest, einen Benzylrest oder einen Phenylrest. Y ist beispielsweise eine Alkylengruppe -(CH₂)₂- oder -(CH₂)₃-.

Weiterhin kommen auch N-Oxylverbindungen wie die folgenden Strukturen in Betracht 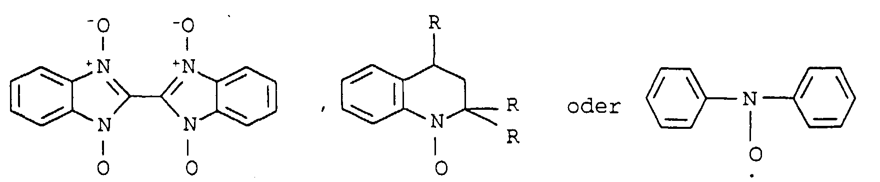 wobei die aromatischen Ringe jeweils noch 1 bis 3 inerte Substituenten tragen können, wie z.B. C₁-C₄-Alkyl, C₁-C₄-Alkoxy oder Cyano.

Vorzugsweise werden sterisch gerinderte Aminderivate von cyclischen Aminen eingesetzt, z.B. von Piperidin- oder Pyrrolidinverbindungen, die im Ring ein weiteres Heteroatom wie Stickstoff, Sauerstoff oder Schwefel enthalten können, wobei dieses Heteroatom nicht in Nachbarstellung zum gehinderten Aminstickstoff steht. Die sterische Hinderung ist durch Substituenten in beiden Nachbarstellungen zum Aminstickstoff gegeben, wobei als Substituenten Kohlenwasserstoffreste in Betracht kommen, die alle 4 Wasserstoffatome der α-CH₂-Gruppen ersetzen. Beispielsweise seien als Substituenten Phenyl, C₃-C₆-Cycloalkyl, Benzyl und insbesondere C₁-C₆-Alkylreste genannt, wobei die an dem selben α-C-Atom gebundenen Alkylreste auch untereinander zu einem 5- oder 6-Ring verbunden sein können. Besonders bevorzugt sind die unter R¹, R² im einzelnen aufgeführten Reste. Vorzugsweise werden als N-Oxyle sterisch gehinderter Amine Derivate des 2,2,6,6-Tetraalkylpiperidins eingesetzt.

Bevorzugte N-Oxyl-Verbindungen zum Einsatz in dem erfindungsgemäßen Verfahren sind solche der allgemeinen Formel I 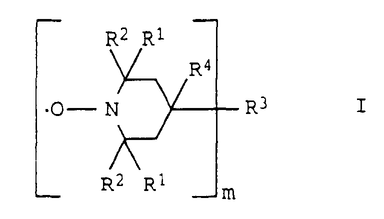 wobei
- R¹, R²: C₁-C₄-Alkyl, Phenyl oder gemeinsam mit dem C-Atom, an das sie gebunden sind, einen 5- oder 6-gliedrigen gesättigten Kohlenwasserstoffring,
- R³: Wasserstoff, Hydroxyl, Amino, SO₃H, SO₃M, PO₃H₂, PO₃HM, PO₃M₂, siliciumorganische Reste oder einen m-wertigen über Sauerstoff oder Stickstoff gebundenen organischen Rest oder zusammen mit R⁴ Sauerstoff oder eine unter R⁴ definierte Ringstruktur, wobei M für ein Alkalimetall steht,
- R⁴: Wasserstoff, C₁-C₁₂-Alkyl oder zusammen mit R³ Sauerstoff oder zusammen mit R³ und dem C-Atom, an das sie gebunden sind, folgende Ringstrukturen 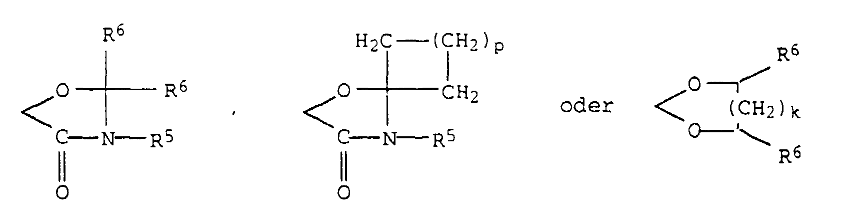 wobei für die Fälle, in denen R³ mit R⁴ einen gemeinsamen Rest bildet, m = 1 ist,
- R⁵: Wasserstoff, C₁-C₁₂-Alkyl oder -(CH₂)_{z}-COOR⁶,
- R⁶: gleiches oder verschiedenes C₁-C₁₈-Alkyl,
- k: 0 oder 1
- z, p: 1 bis 12 und
- m: 1 bis 100
bedeuten.

R¹ und R² können z.B. Methyl, Ethyl, Propyl oder Butyl sein oder sie können zusammen eine Tetra- oder Pentamethylengruppe bilden. Bevorzugt sind R¹ und R² Methylgruppen.

Als R⁴ kommen beispielsweise Wasserstoff, die oben genannten C₁-C₄-Alkylgruppen sowie Pentyl, sec-Pentyl, tert-Pentyl, Neopentyl, Hexyl, 2-Methylpentyl, Heptyl, 2-Methylhexyl, Octyl, Isooctyl, 2-Ethylhexyl, Nonyl, 2-Methylnonyl, Isononyl, 2-Methyloctyl, Decyl, Isodecyl, 2-Methylnonyl, Undecyl, Isoundecyl, Dodecyl und Isododecyl, (die Bezeichnungen Isooctyl, Isononyl und Isodecyl sind Trivialbezeichnungen und stammen von den nach der Oxosynthese erhaltenen Carbonylverbindungen ab; vgl. dazu Ullmann's Encyklopedia of Industrial Chemistry, 5th Edition, Vol. A1. Seiten 290-293, sowie Vol. A10, Seiten 284 und 285) in Betracht.

p ist bevorzugt 6-12, besonders bevorzugt 9.

z ist bevorzugt 1-4, besonders bevorzugt 2.

Als R⁵ kommen neben Wasserstoff beispielsweise die oben angegebenen C₁-C₁₂-Alkylgruppen in Betracht. Bevorzugt steht R⁵ für Wasserstoff, C₁-C₄-Alkyl oder (CH₂)_{z}-COO(C₁-C₆-Alkyl), besonders bevorzugt für die Reste -CH₂-CH₂-COO(CH₂)₁₁-CH₃ und -CH₂-CH₂-COO(CH₂)₁₃-CH₃.

R⁶ kann beispielsweise eine der oben genannten C₁-C₁₂-Alkylgruppen oder Tridecyl, Isotridecyl, Tetradecyl, Pentadecyl, Hexadecyl, Heptadecyl oder Octadecyl sein. Bevorzugt sind Dodecyl und Hexadecyl.

Bevorzugte Reste R³ sind beispielsweise die folgenden m-wertigen Reste 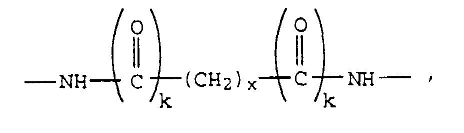 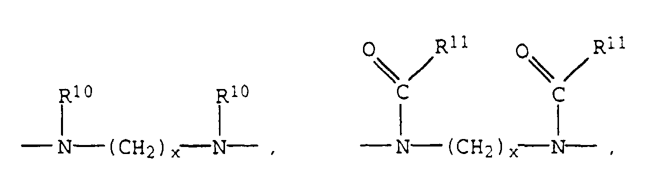 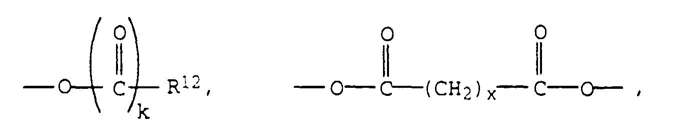 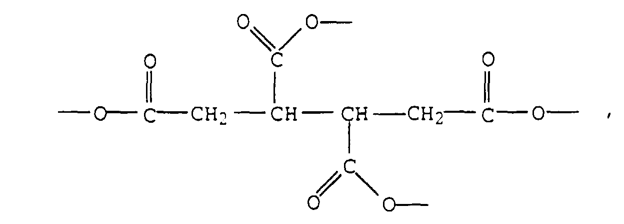 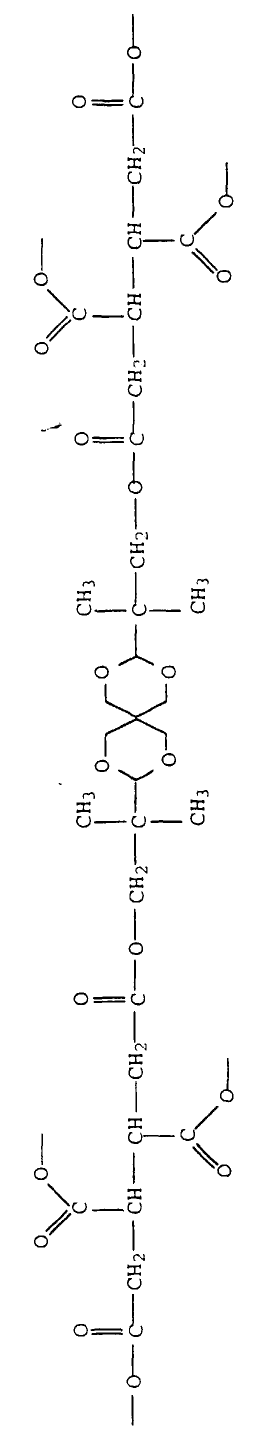 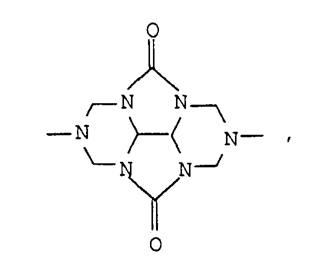 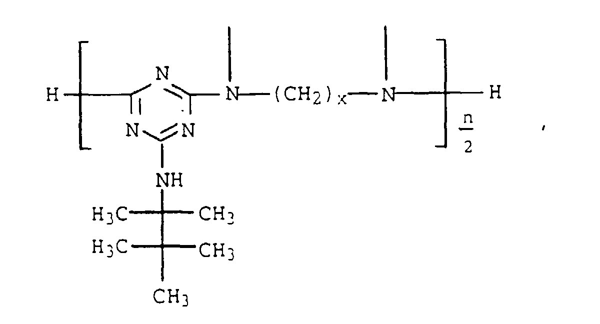 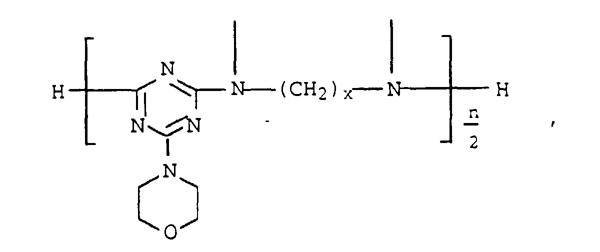 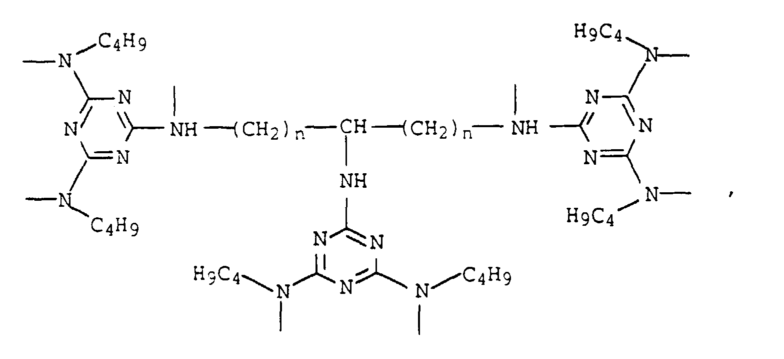 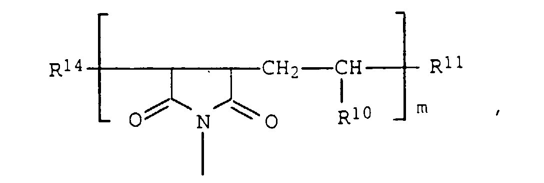 wobei

R⁷ C₁-C₁₂-Alkyl oder -(CH₂)_{z}-COOR⁶

- R⁸: Wasserstoff oder C₁-C₁₈-Alkyl,
- R⁹: C₁-C₁₈-Alkyl, Vinyl oder Isopropenyl,
- R¹⁰: C₈-C₂₂-Alkyl,
- R¹¹: Wasserstoff oder einen organischen Rest, wie er bei der radikalischen Polymerisation der Ausgangsmonomeren üblicherweise entsteht,
- k: 0 oder 1,
- x: 1 bis 12 und
- n: eine gerade Zahl m
bedeuten.

Ist R³ einer dieser Reste, so ist R⁴ bevorzugt Wasserstoff. Die Variable m kann dabei 1 bis 100 bedeuten. Bevorzugt ist m 1,2,3,4 oder eine Zahl von 10 bis 50, wobei besonders bei den oligomeren oder polymeren Resten R³ in der Regel Gemische eingesetzt werden.

Als R⁷ kommen die gleichen Reste in Betracht, wie sie für R⁵ genannt sind. Bevorzugt steht R⁷ für C₁-C₄-Alkyl.

Als R⁸ kommen neben Wasserstoff die gleichen Reste in Betracht, wie sie für R⁶ genannt worden sind. Bevorzugt steht R⁸ für Wasserstoff.

Als R⁹ kommen besonders Vinyl, Isopropenyl oder C₁₅-C₁₇-Alkylreste in Betracht.

Als R¹⁰ kommen beispielsweise die oben genannten C₈-C₁₈-Alkylreste sowie Nonadecyl, Eicosyl, Uneicosyl und Doeicosyl in Betracht. Dabei sind Mischungen verschiedener Reste R¹⁰, die sich in der Länge der Kohlenstoffkette unterscheiden, bevorzugt.

Die Reste R¹¹ sind Wasserstoff oder organische Reste, wie sie bei der radikalischen Polymerisation der Ausgangsmonomeren, in diesem Fall von einem Ethylenderivat und einem Maleinsäureimidderivat, entstehen, also z.B. ein Rest, der aus dem Polymerisationsinitiator oder aus einem intermediär aufgetretenen Radikal entsteht oder ein anderer derartiger Rest, wie er dem Fachmann geläufig ist.

Weiter können auch Nitroxylverbindungen der Formel (Ia) vorteilhaft eingesetzt werden 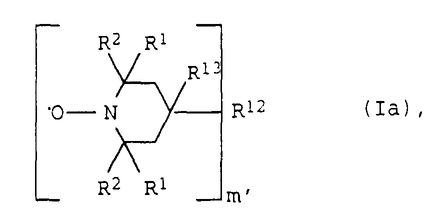 wobei
- R¹ und R²: die oben genannte Bedeutung haben,
- R¹²: einen m'-wertigen über Kohlenstoff, Sauerstoff oder Stickstoff gebundenen Rest,
- R¹³: Wasserstoff, C₁-C₁₂-Alkyl, C₁-C₁₂-Alkoxy oder zusammen mit R¹² einen über Kohlenstoff oder Stickstoff durch eine chemische Doppelbindung an das diese Gruppen tragende C-Atom gebundenen 2 m'-wertigen Rest oder zusammen mit R¹² und dem diese Gruppen tragenden C-Atom einen gesättigten isocyclischen oder heterocyclischen 3- bis 7-gliedrigen Ring, wobei für diesen Fall m=1 ist, und
- m': 1, 2 oder 3 bedeuten.

Als m'-wertige Reste R¹² kommen in Frage C₁-C₄-Alkyl, und unsubstituiertes sowie mit ein bis drei C₁-C₄-Alkylresten substituiertes Phenyl, wobei Beispiele für C₁-C₄-Alkylreste bereits weiter oben angeführt wurden. Die Anbindung dieser Reste an den Piperidinring kann auch über Sauerstoff, eine NH- oder eine N(C₁-C₄-Alkyl)-Gruppe erfolgen.

Mögliche Reste R¹² sind beispielsweise (die Striche kennzeichnen hier die freien Valenzen):

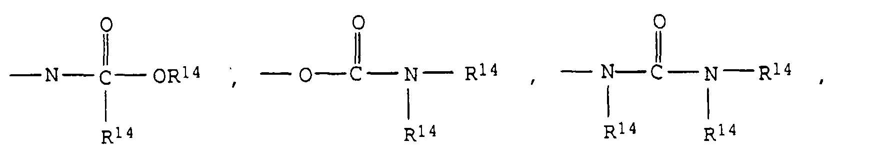

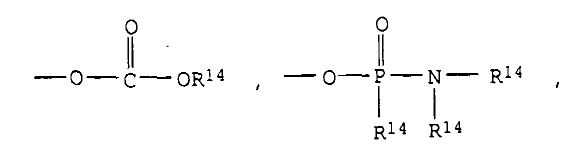

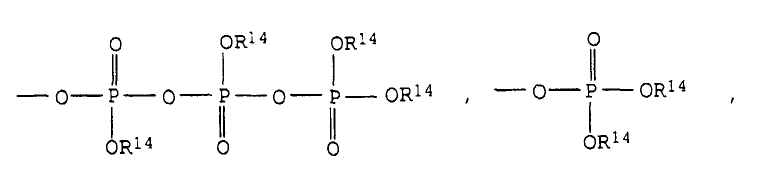

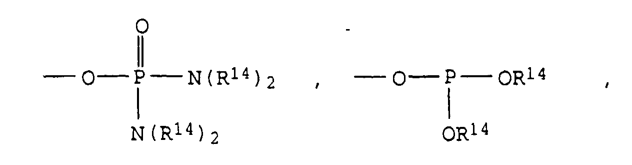

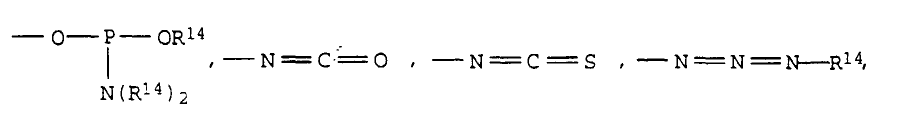

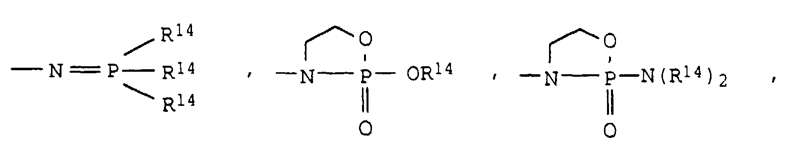

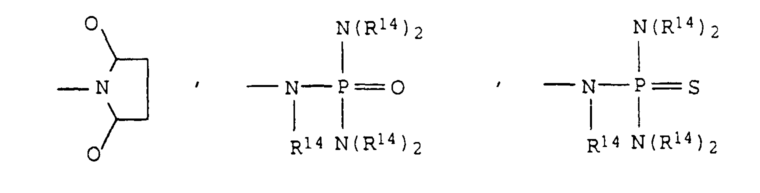

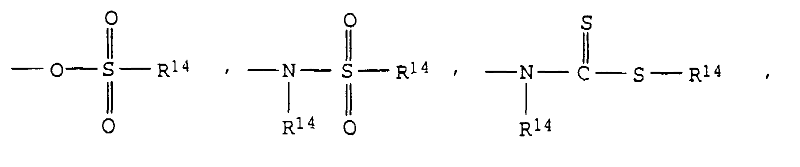

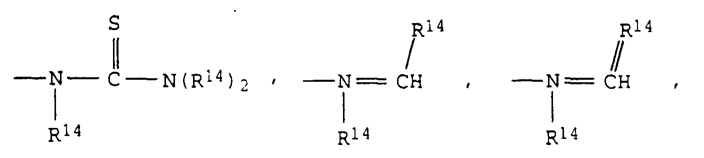

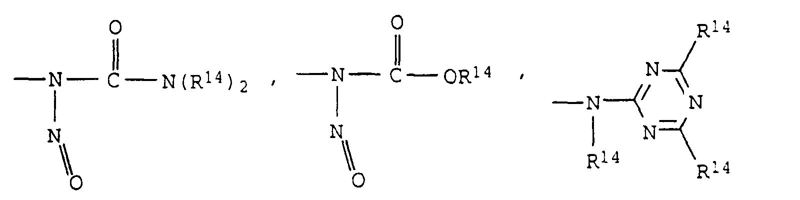

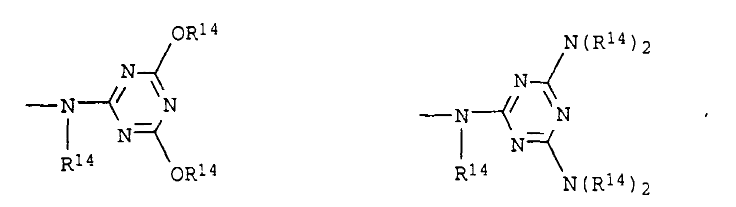

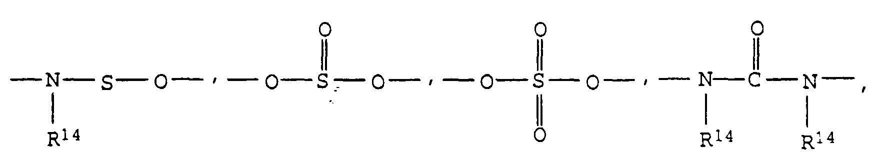

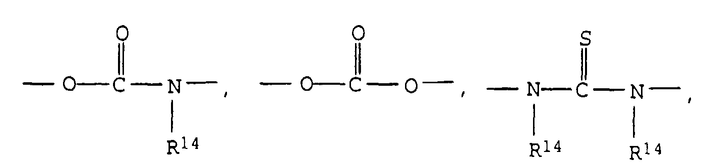

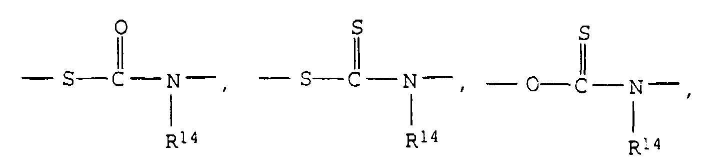

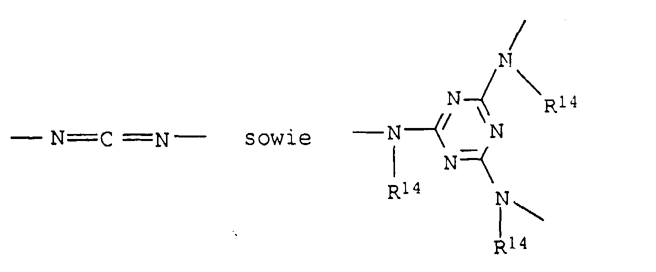

Die als mögliche Reste R¹³ in Frage kommenden C₁-C₁₂-Alkyl und C₁-C₁₂-Alkoxygruppen wurden bereits weiter oben für die Reste R⁴ exemplarisch genannt. Die Reste R¹² und R¹³ können auch zusammen eine Gruppe bilden, welche dann durch eine chemische Doppelbindung über Kohlenstoff oder Stickstoff an das die Gruppen tragende C-Atom (das C-Atom in Position 4 des Piperidinrings) angebunden ist. Solche 2 m'-wertigen Gruppen können beispielsweise sein (die Striche kennzeichnen die freien Valenzen):

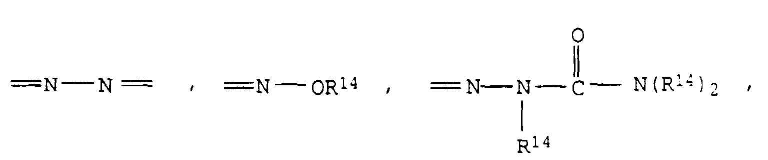

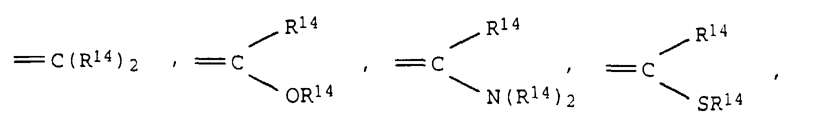

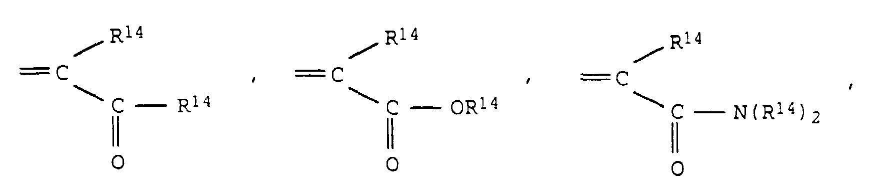

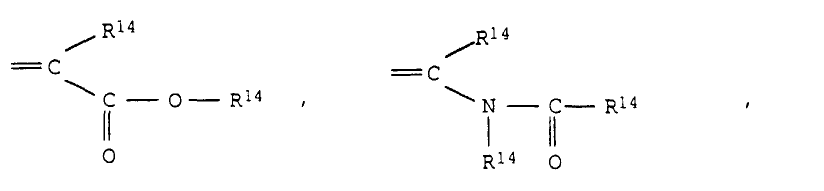

Weiter können die Reste R¹² und R¹³ mit dem diese Gruppen tragenden C-Atome einen 3- bis 7-gliedrigen isocyclischen oder heterocyclischen Ring bilden.

Beispiele für solche Ringe sind etwa:

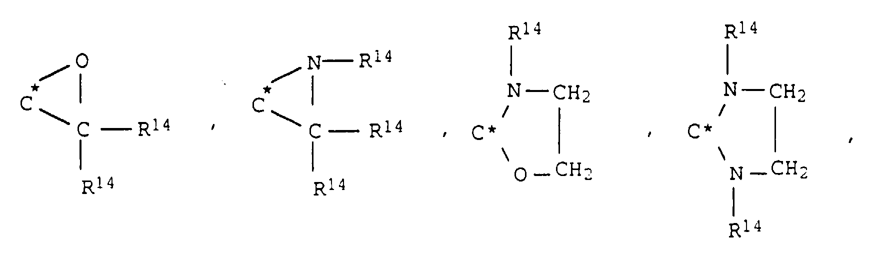

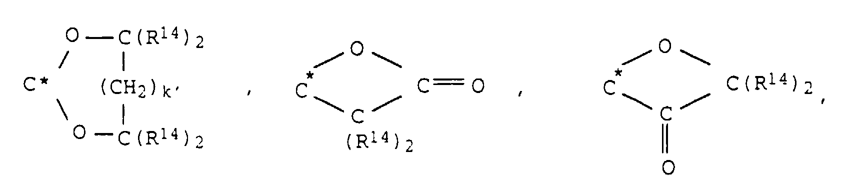

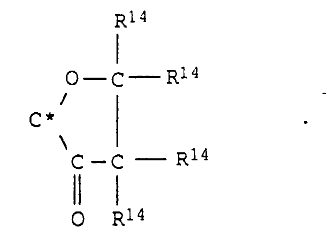

Die Gruppen R¹⁴ können in diesen Gruppen gleich oder verschieden sein und bedeuten Wasserstoff, C₁-C₁₂-Alkyl sowie unsubstituiertes oder mit ein bis vier C₁-C₄-Alkylgruppen substituiertes Phenyl. Beispiele für entsprechende C₁-C₁₂-Alkylgruppen sowie C₁-C₄-Alkylgruppen, welche als Substituenten am Phenylring auftreten können, sind bereits weiter oben genannt. Die Variable k' kann einen Wert von 0,1 und 2 annehmen. "C*" bezeichnet das in das Ringsystem incorporierte C-Atom des Piperidins in 4-Position.

Bevorzugte Nitroxylverbindungen sind auch die folgenden:
1-Oxyl-2,2,6,6-tetramethylpiperidin,
1-Oxyl-2,2,6,6-tetramethylpiperidin-4-ol,
l-Oxyl-2,2,6,6-tetramethylpiperidin-4-on,
1-Oxyl-2,2,6,6-tetramethylpiperidin-4-yl-acetat,
1-Oxyl-2,2,6,6-tetramethylpiperidin-4-yl-2-ethylhexanoat,
1-Oxyl-2,2,6,6-tetramethylpiperidin-4-yl-stearat,
1-Oxyl-2,2,6,6-tetramethylpiperidin-4-yl-benzoat,
1-Oxyl-2,2,6,6-tetramethylpiperidin-4-yl-(4-tert-butyl)benzoat,
Bis(1-oxyl-2,2,6,6-tetramethylpiperidin-4-yl)-succinat,
Bis(1-oxyl-2,2,6,6-tetramethylpiperidin-4-yl)-adipat,
Bis(1-oxyl-2,2,6,6-tetramethylpiperidin-4-yl)-sebacat,
Bis(1-oxyl-2,2,6,6-tetramethylpiperidin-4-yl)-n-butylmalonat,
Bis(1-oxyl-2,2,6,6-tetramethylpiperidin-4-yl)-phthalat,
Bis(1-oxyl-2,2,6,6-tetramethylpiperidin-4-yl)-isophthalat,
Bis(1-oxyl-2,2,6,6-tetramethylpiperidin-4-yl)-terephthalat,
Bis(1-oxyl-2,2,6,6-tetramethylpiperidin-4-yl)-hexyhydroterephthalat,
N,N'-Bis(l-oxyl-2,2,6,6-tetramethylpiperidin-4-yl)-adipinamid,
N-(1-Oxyl-2,2,6,6-tetramethylpiperidin-4-yl)-caprolactam,
N-(1-Oxyl-2,2,6,6-tetramethylpiperidin-4-yl)-dodecylsuccinimid,
2,4,6-Tris-[N-butyl-N-(1-oxyl-2,2,6,6,-tetramethylpiperidin-4-yl]-s-triazin,
4,4'-Ethylenbis(1-oxyl-2,2,6,6-tetramethylpiperazin-3-on) und
Tris-(2,2,6,6-tetramethyl-l-oxyl-piperidin-4-yl)phosphit.

Als besonders vorteilhaft hat sich der Einsatz von N,N'-Bis-(1-oxyl-2,2,6,6-tetramethylpiperidin-4-yl)-N,N'-bisformyl-1,6-diaminohexan als N-Oxylverbindung im erfindungsgemäßen Verfahren erwiesen.

Die beschriebenen Nitroxylverbindungen lassen sich aus den entsprechenden Piperidinverbindungen durch Oxidation z.B. mit Wasserstoffperoxid herstellen. Details zu dieser Oxidation sind z.B. in der älteren deutschen Patentanmeldung 195 101 84.7 genannt. Die sekundären Amine, welche an den α-C-Atomen keine Wasserstoffatome tragen, wie Piperidinverbindungen, und ihre Herstellung sind allgemein bekannt.

### Beispiele 1 bis 3

Ein 3-1-Stahlautoklav wurde mit
- 1300 g: Wasser
- 10,5 g: 4 gew.-%iger Polyvinylalkohollsg., Verseifungsgrad 88 %
- 0,34 g: 40 gew.-%iger Polyvinylalkohollsg., Verseifungsgrad 47 %
- 11,65 g: 3 gew.-%iger Hydroxypropylmethylcelluloselsg.
- 0,56 g: tert.-Butylperneodecanoat,
- 1,75 g: Natriumtripolyphosphat
sowie variierenden Mengen (s. Tabelle) N,N'-Bis-(1-oxyl-2,2,6,6-tetramethylpiperidin-4-yl)-N,N'-bisformyl-1,6-diaminohexan gefüllt. Der Autoklav wurde verschlossen, mit Stickstoff gespült und auf Dichtigkeit geprüft und evakuiert. Dann wurden 700 g Vinylchlorid eingeleitet. Der Autoklav wurde auf 55°C aufgeheizt. Es wurde solange polymerisiert, bis der Druck um 4 bar gefallen war, anschließend wurde der Autoklav entspannt. Die Ergebnisse sind der Tabelle zu entnehmen.

### Beispiel 4

Eine 0,1 %ige Lösung von N,N'-Bis-(1-oxyl- 2,2,6,6-tetramethylpiperidin-4-yl)-N,N'-bisformyl-1,6-diaminohexan in Methanol wurde auf die innere Oberfläche des Autoklaven gleichmäßig aufgesprüht und bei Raumtemperatur getrocknet. Der Autoklav wurde genau so beladen und die Reaktion so durchgeführt wie in den Beispielen 1 bis 3, jedoch ohne Zugabe von N,N'-Bis-(1-oxyl- 2,2,6,6-tetramethylpiperidin-4-yl)-N)N'-bisformyl-1,6-diaminohexan. Das Ergebnis ist in der Tabelle angegeben.

### Nicht erfindungsgemäßes Vergleichsbeispiel

Ein Autoklav wurde genau so beladen und die Reaktion so durchgeführt wie in Beispiel 4, jedoch ohne die Oberfläche zu besprühen. Das Ergebnis ist in der Tabelle angegeben.

**Tabelle**

| Beispiel | N-Oxyl | Laufzeit min. | Belag |
|---|---|---|---|
| 1 | 10 ppm | 269 | Belag nur oberhalb des Flüsigkeitsspiegels |
| 2 | 20 ppm | 332 | Belag nur oberhalb des Flüsigkeitsspiegels |
| 3 | 50 ppm | 405 | Belag nur oberhalb des Flüsigkeitsspiegels |
| 4 | * | 264 | Belagfrei |
| Vergleich | - | 256 | Belag überall; nur mechanisch entfernbar |

| | | | |
|---|---|---|---|
| * Autoklav mit N,N'-Bis-(1-oxyl-2,2,6,6-tetramethylpiperidin-4-yl)-N,N'-bisformyl-1,6-diaminohexan-Lösung besprüht | | | |

## Patentansprüche

1. Verwendung von N-Oxyl-Verbindungen sekundärer Amine, welche keine Wasserstoffatome an den α-C-Atomen tragen, zur Verhinderung von Belägen an Reaktoroberflächen bei der Polymerisation von vinylischen Monomeren in wässriger Phase, wobei die N-Oxyl-Verbindungen in Mengen von 2 bis 50 ppm, bezogen auf das Gesamtgewicht der Monomeren, eingesetzt werden.

2. Verwendung nach Anspruch 1, dadurch gekennzeichnet, daß man die N-Oxyl-Verbindung dem Polymerisationsgemisch zugibt.

3. Verwendung nach Anspruch 1, dadurch gekennzeichnet, daß man die Reaktoroberflächen vor der Befüllung des Reaktors mit dem Polymerisationsgemisch mit einer Lösung der N-Oxyl-Verbindung benetzt.

4. Verwendung nach den Ansprüchen 1 bis 3 bei der Polymerisation von Styrol und gewünschtenfalls weiteren Comonomeren, gegebenenfalls in Gegenwart von Treibmitteln.

5. Verwendung nach den Ansprüchen 1 bis 3 bei der Polymerisation von Vinylchlorid.

6. Verwendung nach den Ansprüchen 1 bis 5, dadurch gekennzeichnet, daß als N-Oxyl-Verbindungen solche der allgemeinen Formel I 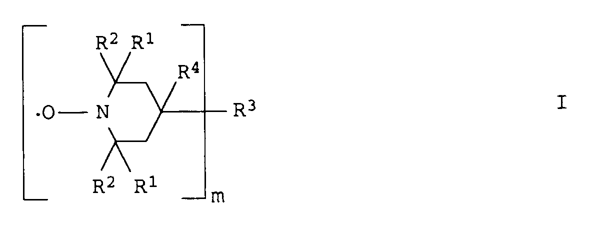 eingesetzt werden, wobei
R¹, R² C₁-C₄-Alkyl, Phenyl oder gemeinsam mit dem C-Atom, an das sie gebunden sind, einen 5- oder 6-gliedrigen gesättigten Kohlenwasserstoffring,
R³ Wasserstoff, Hydroxyl, Amino, SO₃H, SO₃M, PO₃H₂, PO₃HM, PO₃M₂, siliciumorganische Reste oder einen m-wertigen über Sauerstoff oder Stickstoff gebundenen organischen Rest oder zusammen mit R⁴ Sauerstoff oder eine unter R⁴ definierte Ringstruktur, wobei M für ein Alkalimetall steht,
R⁴ Wasserstoff, C₁-C₁₂-Alkyl oder zusammen mit R³ Sauerstoff oder zusammen mit R³ und dem C-Atom, an das sie gebunden sind, folgende Ringstrukturen 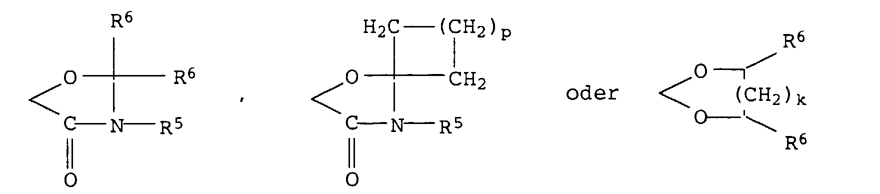 wobei für die Fälle, in denen R³ mit R⁴ einen gemeinsamen Rest bildet, m = 1 ist,
R⁵ Wasserstoff, C₁-C₁₂-Alkyl oder -(CH₂)_{z}-COOR⁶,
R⁶ gleiches oder verschiedenes C₁-C₁₈-Alkyl,
k 0 oder 1
z, p 1 bis 12 und
m 1 bis 100
bedeuten.

7. Verwendung nach Anspruch 6, dadurch gekennzeichnet, daß der Rest R³ in Formel I einen Rest aus der folgenden Gruppe bedeutet: 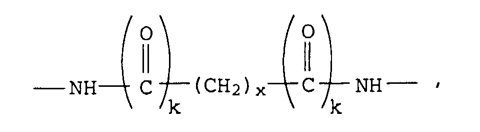 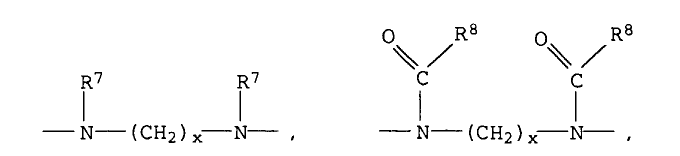 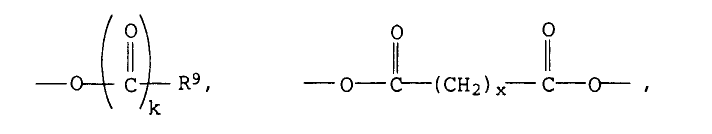 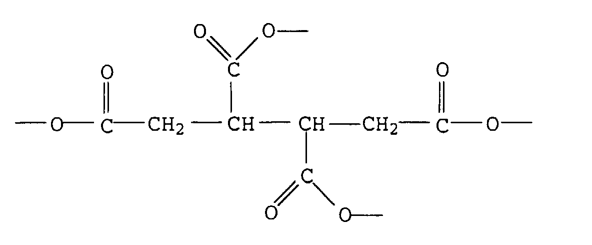 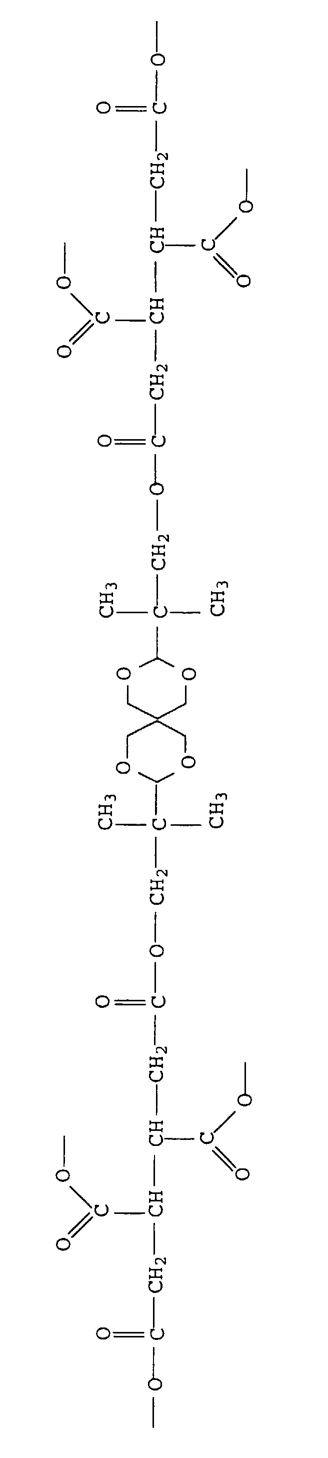 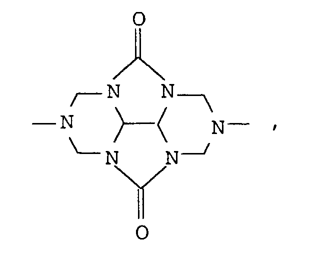 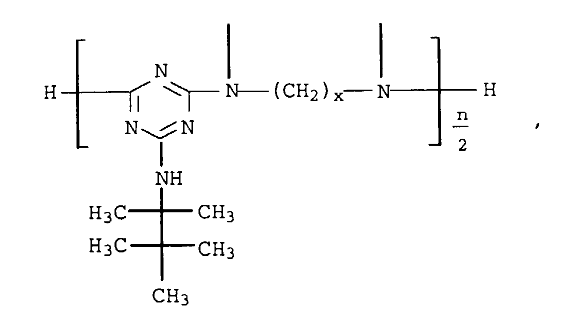 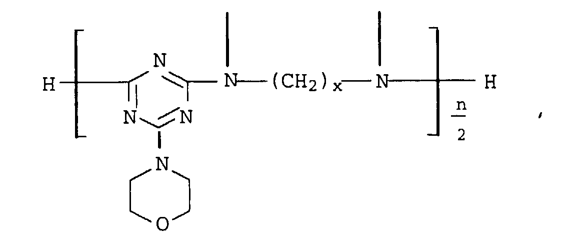 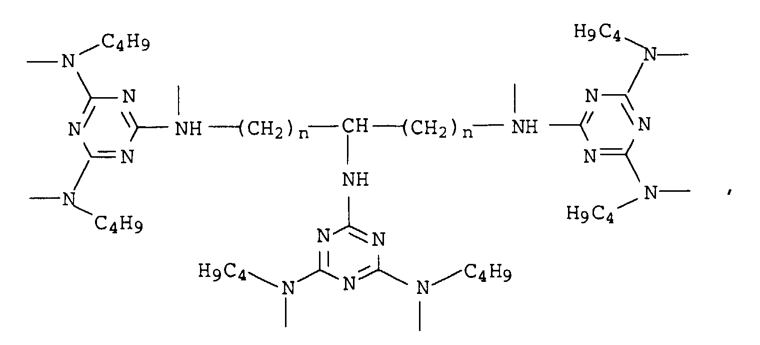 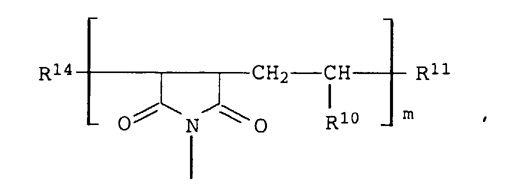 wobei
R⁷ C₁-C₁₂-Alkyl oder (CH₂)_{z}-COOR⁶
R⁸ Wasserstoff oder C₁-C₁₈-Alkyl,
R⁹ C₁-C₁₈-Alkyl, Vinyl oder Isopropenyl,
R¹⁰ C₈-C₂₂-Alkyl,
R¹¹ Wasserstoff oder einen organischen Rest, wie er bei der radikalischen Polymerisation der Ausgangsmonomeren üblicherweise entsteht,
k 0 oder 1,
x 1 bis 12 und
n eine gerade Zahl m
bedeuten.

8. Verwendung nach den Ansprüchen 1 bis 7, dadurch gekennzeichnet, daß als N-Oxyl-Verbindung N,N'-Bis(l-oxyl-2,2,6,6-tetramethylpiperidin-4-yl)-N,N'-bisformyl-1,6-diaminohexan eingesetzt wird.

## Claims

1. The use of N-oxyl compounds of secondary amines which carry no hydrogens on the a carbons to prevent deposits on reactor surfaces during the polymerization of vinyl monomers in aqueous phase, where the N-oxyl compounds are employed in amounts from 2 to 50 ppm, based on the overall weight of the monomers.

2. The use as claimed in claim 1, wherein the N-oxyl compound is added to the polymerization mixture.

3. The use as claimed in claim 1, wherein the reactor surfaces are wetted with a solution of the N-oxyl compound before the reactor is filled with the polymerization mixture.

4. The use as claimed in claims 1 to 3 in the polymerization of styrene alone or together with further comonomers, in the presence of blowing agents if desired.

5. The use as claimed in claims 1 to 3 in the polymerization of vinyl chloride.

6. The use as claimed in claims 1 to 5, wherein N-oxyl compounds employed are those of the general formula I 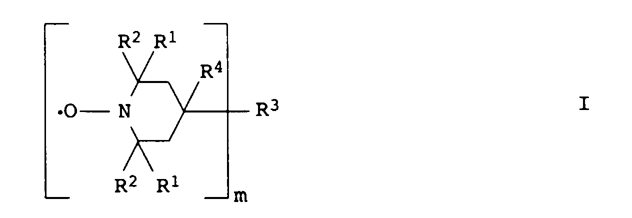 where
R¹ and R² are C₁-C₄-alkyl or phenyl or, together with the carbon to which they are attached, are a 5- or 6-membered saturated hydrocarbon ring,
R³ is hydrogen, hydroxyl, amino, SO₃H, SO₃M, PO₃H₂, PO₃HM, PO₃M₂, organosilicon radicals or an m-valent organic radical which is attached via oxygen or nitrogen, or, together with R⁴, is oxygen or a ring structure defined under R⁴, where M is an alkali metal,
R⁴ is hydrogen or C₁-C₁₂-alkyl or, together with R³, is oxygen or, together with R³ and the carbon to which they are attached, is a ring structure 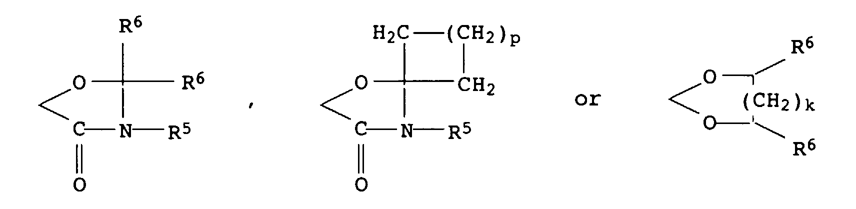 where, if R³ and R⁴ join to form a radical, m is 1,
R⁵ is hydrogen, C₁-C₁₂-alkyl or -(CH₂)_{z}-COOR⁶,
R⁶ is identical or different C₁-C₁₈-alkyl,
k is 0 or 1
z, p are from 1 to 12, and
m is from 1 to 100.

7. The use as claimed in claim 6, wherein the radical R³ in formula I is a radical from the following group: 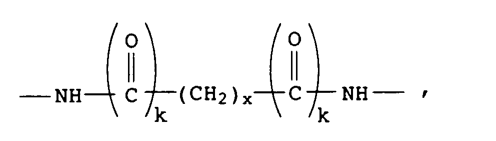 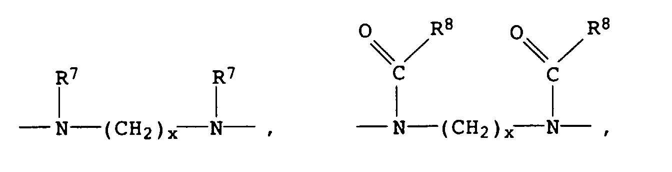 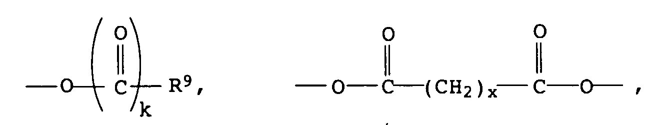 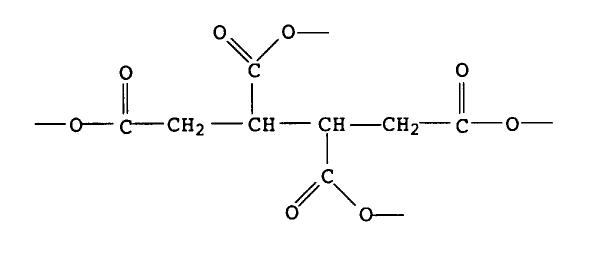 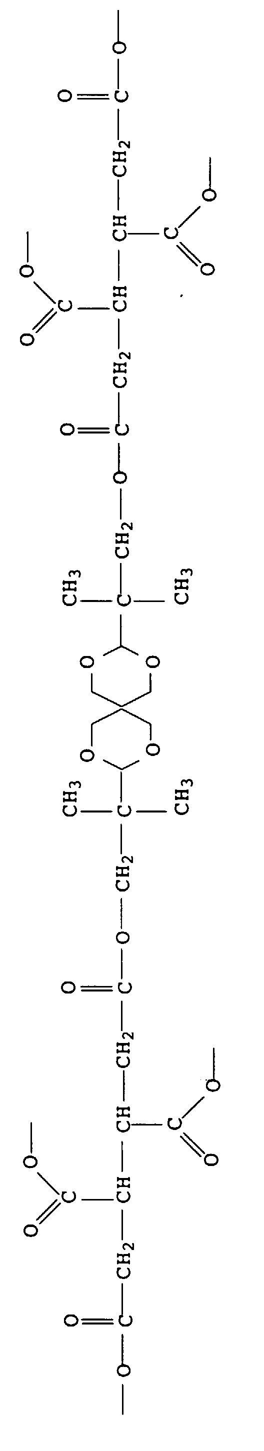 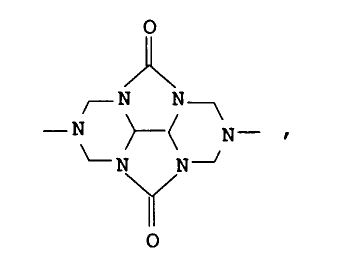 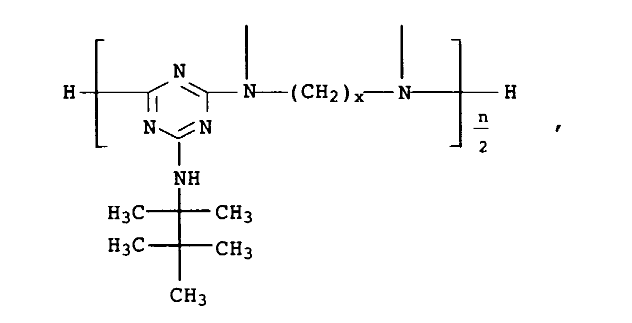 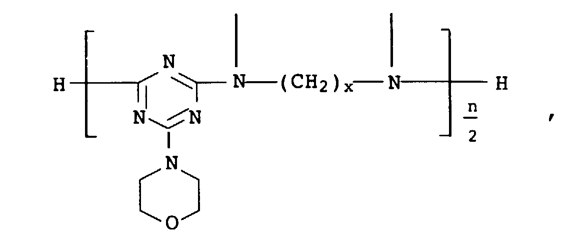 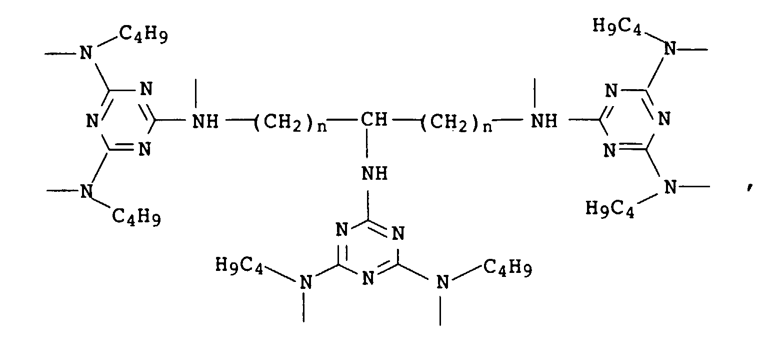 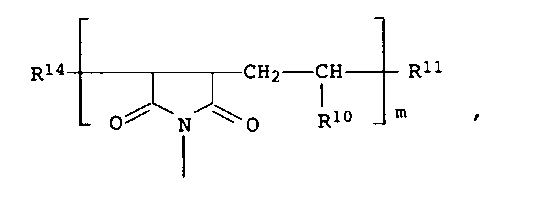 where
R⁷ is C₁-C₁₂-alkyl or -(CH₂)_{z}-COOR⁶
R⁸ is hydrogen or C₁-C₁₈-alkyl,
R⁹ is C₁-C₁₈-alkyl, vinyl or isopropenyl,
R¹⁰ is C₈-C₂₂-alkyl,
R¹¹ is hydrogen or an organic radical as normally formed in the free-radical polymerization of the initial monomers,
k is 0 or 1,
x is from 1 to 12 and
n is an even number m.

8. The use as claimed in claims 1 to 7, wherein N,N'-bis(1-oxyl-2,2,6,6-tetramethylpiperidin-4-yl)-N,N'-bis-formyl-1,6-diaminohexane is employed as the N-oxyl compound.

## Revendications

1. Utilisation de composés N-oxyle d'amines secondaires, ne portant aucun atome d'hydrogène sur les atomes de carbone en a, pour empêcher les dépôts sur les surfaces des réacteurs lors de la polymérisation de monomères vinyliques en phase aqueuse, où les composés N-oxyle sont utilisés en des quantités de 2 à 50 ppm, par rapport au poids total des monomères.

2. Utilisation selon la revendication 1, caractérisée en ce que l'on ajoute le composé N-oxyle au mélange de polymérisation.

3. Utilisation selon la revendication 1, caractérisée en ce que l'on humecte les surfaces du réacteur avant son remplissage avec le mélange de polymérisation avec une solution du composé N-oxyle.

4. Utilisation selon l'une quelconque des revendications 1 à 3, lors de la polymérisation du styrène et éventuellement d'autres comonomères, éventuellement en présence d'agents d'expansion.

5. Utilisation selon l'une quelconque des revendications 1 à 3, lors de la polymérisation du chlorure de vinyle.

6. Utilisation selon l'une quelconque des revendications 1 à 5, caractérisée en ce que l'on utilise en tant que composés N-oxyle ceux de formule générale : 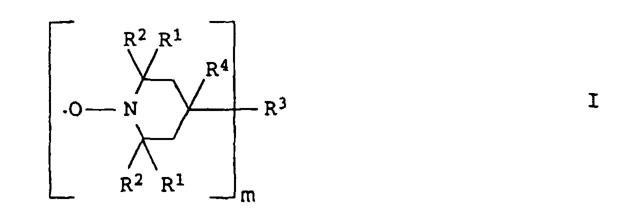 où
R¹, R² représentent des groupements alkyle en C₁-C₄, phényle ou bien représentent ensemble avec l'atome de carbone qui les relie un cycle hydrocarboné saturé à 5 ou 6 maillons,
R³ représente un atome d'hydrogène, un groupement hydroxyle, amino, SO₃H, SO₃M, PO₃H₂, PO₃HM, PO₃M₂, des restes organosiliciés ou un reste organique m-valent relié par de l'oxygène ou de l'azote, ou bien ensemble avec R⁴ de l'oxygène ou une structure cyclique définie pour R⁴, où M est mis pour un métal alcalin,
R⁴ représente un atome d'hydrogène, un groupement alkyle en C₁-C₁₂ ou bien ensemble avec R³ de l'oxygène ou bien ensemble avec R³ et l'atome de carbone qui les relie, les structures cycliques suivantes 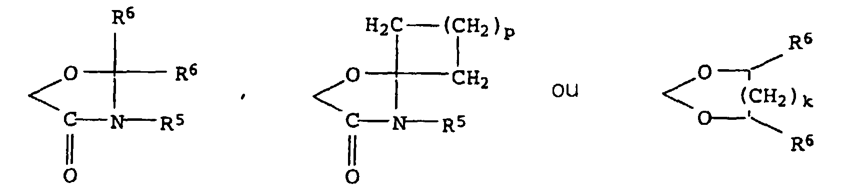 où lorsque R³ forme avec R⁴ un reste commun, m vaut 1,
R⁵ représente un atome d'hydrogène, un groupement alkyle en C₁-C₁₂ ou -(CH₂)_{z}-COOR⁶,
R⁶ représentent des groupements alkyle en C₁-C₁₈ identiques ou différents,
k vaut 0 ou 1,
z, p valent de 1 à 12 et
m vaut 1 à 100.

7. Utilisation selon la revendication 6, caractérisée en ce que le reste R³ dans la formule I représente un reste choisi dans le groupe suivant : 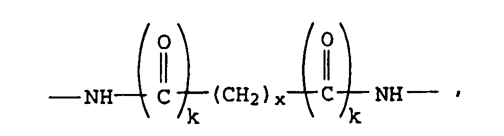 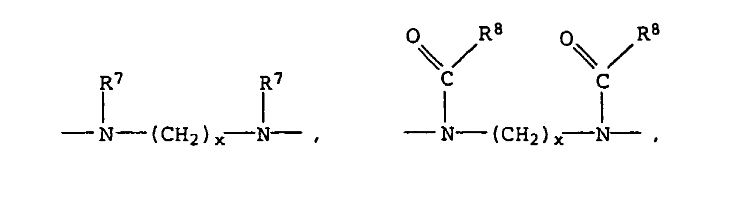 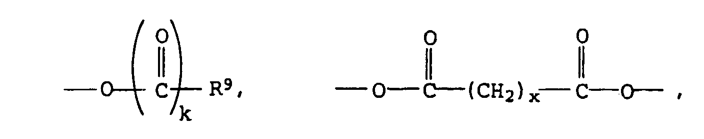 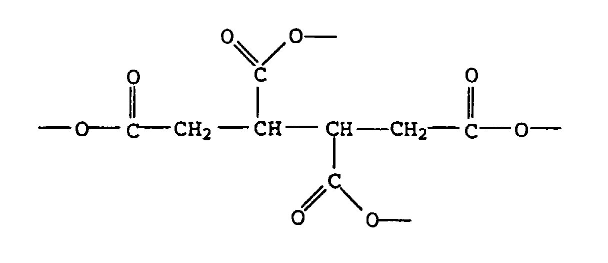 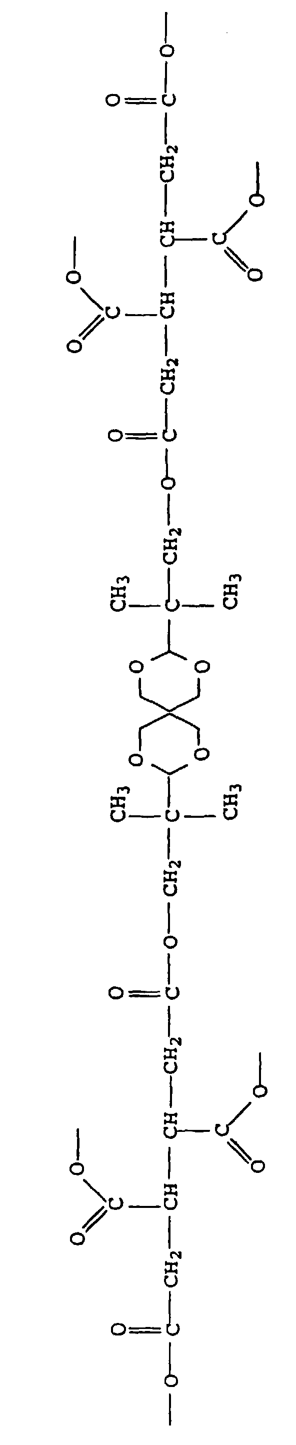 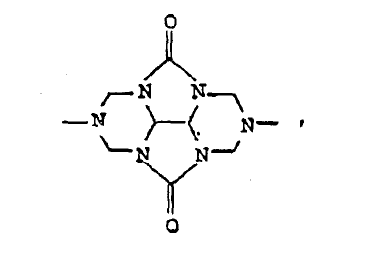 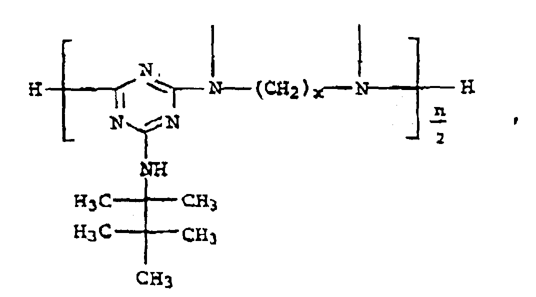 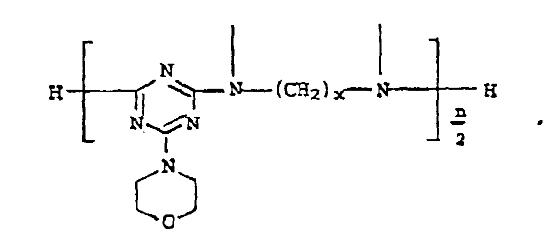 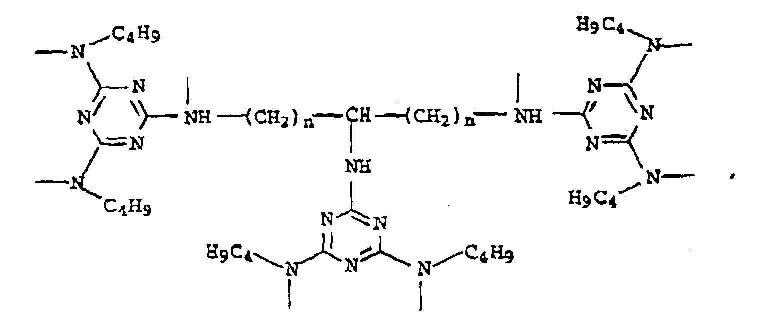 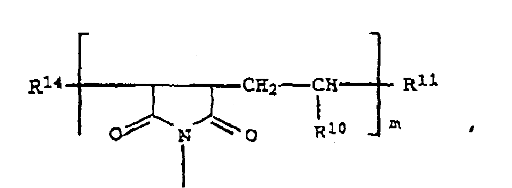 où
R⁷ représente un groupement alkyle en C₁-C₁₂ ou -(CH₂)_{z}-COOR⁶,
R⁸ représente un atome d'hydrogène ou un groupement alkyle en C₁-C₁₈,
R⁹ représente un groupement alkyle en C₁-C₁₈, vinyle ou isopropényle,
R¹⁰ représente un groupement alkyle en C₈-C₂₂,
R¹¹ représente un atome d'hydrogène ou un reste organique, tel qu'obtenu habituellement lors de la polymérisation radicalaire des monomères de départ,
k vaut 0 ou 1,
x vaut 1 à 12 et,
n représente un nombre pair m.

8. Utilisation selon l'une quelconque des revendications 1 à 7, caractérisée en ce que l'on utilise du N,N'-bis(1-oxyl-2,2,6,6-tétraméthylpipéridine-4-yle)-N,N'-bisformyl-1,6-diaminohexane, en tant que composé N-oxyle.
